# EUROPEAN PATENT APPLICATION

(11) **EP 3 668 029 A1**
(43) Date of publication of application: **17.06.2020**
(21) Application number: 17920633.9
(22) Date of filing: 10.08.2017
(51) Int. Cl.: H04L 27/26, H04B 7/06

(54) **USER TERMINAL AND RADIO COMMUNICATION DEVICE**

(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); WANG, Jing, Beijing 100190 (CN); LIU, Liu, Beijing 100190 (CN)
(74) Representative: Hoffmann Eitle
(86) International application number: PCT/JP2017/029222
(87) International publication number: WO 2019/030928

(57) **Abstract**

To measure received quality appropriately. A user terminal according to one aspect of the present invention includes: a receiving section that receives a reference signal in one or more reference signal resources for a measurement of a channel state; and a measurement section that measures a first received power of the reference signal and a second received power in radio resources associated with the one or more reference signal resources, wherein the measurement section derives received quality of a cell, based on the first received power and the second received power.

## Description

### Technical Field

The present invention relates to a user terminal and a radio communication method in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). Specifications of LTE-A (also referred to as "LTE advanced," "LTE Rel. 10," "LTE Rel. 11," or "LTE Rel. 12") have been drafted for the purpose of further increasing broadband and speed from LTE (also referred to as "LTE Rel. 8" or "LTE Rel. 9"), and successor systems of LTE (referred to as, for example, "FRA (Future Radio Access)," "5G (5th generation mobile communication system)," "NR (New Radio)," "NX (New radio access)," "FX (Future generation radio access)," "LTE Rel. 13," "LTE Rel. 14," "LTE Rel. 15" (or later versions), and so on) are also under study.

In LTE Rel.10/11, carrier aggregation (CA) for integrating a plurality of component carriers (CCs) is introduced to achieve enhanced broadband. Each CC is constituted of system bands of LTE Rel. 8 as one unit. In CA, a plurality of CCs of the same base station (for example, referred to as an "eNB (evolved Node B)", a "BS (Base Station)," and the like) are configured for a user terminal (UE (User Equipment)).

Meanwhile, in LTE Rel. 12, dual connectivity (DC) in which a plurality of cell groups (CGs) of different radio base stations are configured for a UE is also introduced. Each cell group is constituted of at least one cell (CC). Since a plurality of CCs of different radio base stations are integrated in DC, DC is also referred to as "inter-base station CA (Inter-eNB CA)," and the like.

In LTE Rel. 8 to Rel. 12, frequency division duplex (FDD), which performs downlink (DL) transmission and uplink (UL) transmission in different frequency bands, and time division duplex (TDD), which performs downlink transmission and uplink transmission in the same frequency band by switching between downlink transmission and uplink transmission in terms of time, are introduced.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is expected that future radio communication systems (for example, 5G, NR) are implemented to satisfy different requirements (for example, ultra-high speed, high capacity, ultra low latency, and the like) in various radio communication services.

For example, for 5G/NR, providing radio communication services referred to as "eMBB (enhanced Mobile Broad Band)," "mMTC (massive Machine Type Communication)," "URLLC (Ultra Reliable and Low Latency Communications)," and the like is studied.

In LTE, it is prescribed that a UE measures and reports received quality. However, in NR, it has not been yet decided how to measure received quality. In a case that a received signal is not measured appropriately, communication throughput might deteriorate.

The present invention has been made in view of the above, and it is therefore an object of the present invention to provide a user terminal and a radio communication method that can measure received quality appropriately.

### Solution to Problem

A user terminal according to one aspect of the present invention includes: a receiving section that receives a reference signal in one or more reference signal resources for a measurement of a channel state; and a measurement section that measures a first received power of the reference signal and a second received power in radio resources associated with the one or more reference signal resources, wherein the measurement section derives received quality of a cell, based on the first received power and the second received power.

### Advantageous Effects of Invention

According to the present invention, received quality can be measured appropriately.

### Brief Description of Drawings

FIG. 1 is a conceptual explanatory diagram of an SS block;
FIGS. 2A and 2B are diagrams to show an example of an RSSI measurement based on the SS block;
FIGS. 3A to 3D are diagrams to show examples of measurement resources of beam level RSSIs in a case that a plurality of CSI-RS resource configurations corresponding to a plurality of beams are multiplexed in TDM;
FIGS. 4A to 4D are diagrams to show examples of measurement resources of beam level RSSIs in a case that a plurality of CSI-RS resource configurations corresponding to a plurality of beams are multiplexed in FDM;
FIG. 5 is a diagram to show an example of an assumption a on a relationship between an RSRP measurement and a UE reception beam;
FIG. 6 is a diagram to show an example of a relationship between aspect 1-1 to aspect 1-3;
FIGS. 7A to 7E are diagrams to show examples of measurement resources of cell level RSSIs in a case that a plurality of CSI-RS resource configurations corresponding to a plurality of beams are multiplexed in TDM;
FIGS. 8A to 8C are diagrams to show examples of measurement resources of cell level RSSIs in a case that a plurality of CSI-RS resource configurations corresponding to a plurality of beams are multiplexed in TDM and FDM;
FIG. 9 is a diagram to show an example of a relationship between aspect 2-1 to aspect 2-4;
FIGS. 10A to 10C are diagrams to show examples of a relationship between a first embodiment and a second embodiment;
FIG. 11 is a diagram to show an example of a schematic structure of a radio communication system according to one embodiment of the present invention;
FIG. 12 is a diagram to show an example of an overall structure of a radio base station according to one embodiment of the present invention;
FIG. 13 is a diagram to show an example of a functional structure of the radio base station according to one embodiment of the present invention;
FIG. 14 is a diagram to show an example of an overall structure of a user terminal according to one embodiment of the present invention;
FIG. 15 is a diagram to show an example of a functional structure of the user terminal according to one embodiment of the present invention; and
FIG. 16 is a diagram to show an example of a hardware structure of the radio base station and the user terminal according to one embodiment of the present invention.

### Description of Embodiments

In existing LTE, a UE supports an intra-frequency measurement, which measures a serving carrier in connection, and an inter-frequency measurement, which measures a non-serving carrier different from the serving carrier. In the intra-frequency measurement and the inter-frequency measurement, at least one of a reference signal received power (RSRP), a received signal strength (RSSI (Received Signal Strength Indicator)), and a reference signal received quality (RSRQ) of a target carrier is measured.

The RSRP is defined as a linear average (power per resource element) for power contribution [W] of resource elements carrying a CRS (Cell-specific Reference Signal) in a certain frequency bandwidth. In a case that a higher layer indicates a measurement based on a discovery signal, the UE measures an RSRP in a subframe in a configured discovery signal opportunity. The reference point for the RSRP is an antenna connector of the UE.

The RSRQ is defined as N x RSRP/RSSI. Here, N is the number of RBs (resource blocks) of an RSSI measurement bandwidth. A measurement of a numerator (RSRP) and a denominator (RSSI) is performed for the same set of resource blocks.

The RSSI is a linear average of transmission and/or reception power [W] observed only in a certain OFDM symbol of the measurement subframe in the measurement bandwidth for N RBs by UE, from all signal sources including inter-channel serving cell and non-serving cell, adjacent channel interference, thermal noise, and the like.

Unless other resources are indicated by the higher layer, the RSSI is measured only from the OFDM including the reference symbol with respect to antenna port 0 of the measurement subframe. In a case that the higher layer indicates all the OFDM symbols for execution of the RSRQ measurement, the RSSI is measured from all the OFDM symbols of the DL part of the measurement subframe. In a case that the higher layer indicates a certain subframe for execution of the RSRQ measurement, the RSSI is measured from all the OFDM symbols of the DL part of the indicated subframe.

In a case that the higher layer indicates a measurement based on a discovery signal, the UE measures an RSSI in a subframe in a configured discovery signal opportunity.

The reference point for the RSRQ is an antenna connector of the UE.

An RSRP (CSI-RSRP (CSI (Channel State Information)-Reference Signal Received Power)) using a CSI-RS (Reference Signal) is defined. The CSI-RSRP is defined as a linear average for power contribution [W] of resource elements carrying a CSI-RS configured for a discovery signal measurement in a measurement frequency bandwidth in a subframe in a discovery signal opportunity. The reference point for the CSI-RSRQ is an antenna connector of the UE.

The UE in a connected mode (connected state, RRC_CONNECTED) may measure an RS-SINR (Reference Signal-Signal to Noise and Interference Ratio). The RS-SINR is defined as a value of a linear average for the power contribution [W] of the resource elements carrying the CRS divided by a linear average of the power contribution [W] of the noise and interference for the resource elements carrying the CRS in the same frequency bandwidth. The reference point for the RS-SINR is an antenna connector of the UE. Note that the RS-SINR may be referred to simply as the "SINR."

RMTC (RSSI Measurement Timing Configuration) for LAA (License-Assisted Access) is defined. The UE configures the RMTC according to received parameters. The parameters include a periodicity, a subframe offset, and measuring duration. According to the RMTC, resources can be configured for a measurement report of the RSSI flexibly in comparison with the configuration of the RSSI for the RSRQ.

Alternatively, in future radio communication systems (for example, LTE Rel. 14, LTE Rel. 15 or later versions, 5G, NR, and the like: also referred to as "NR" hereinafter), a resource unit including a synchronization signal and a broadcast channel is defined as an SS block (Synchronization Signal Block, SS/PBCH (Physical Broadcast Channel) block), and it is studied to perform an initial access, based on the SS block.

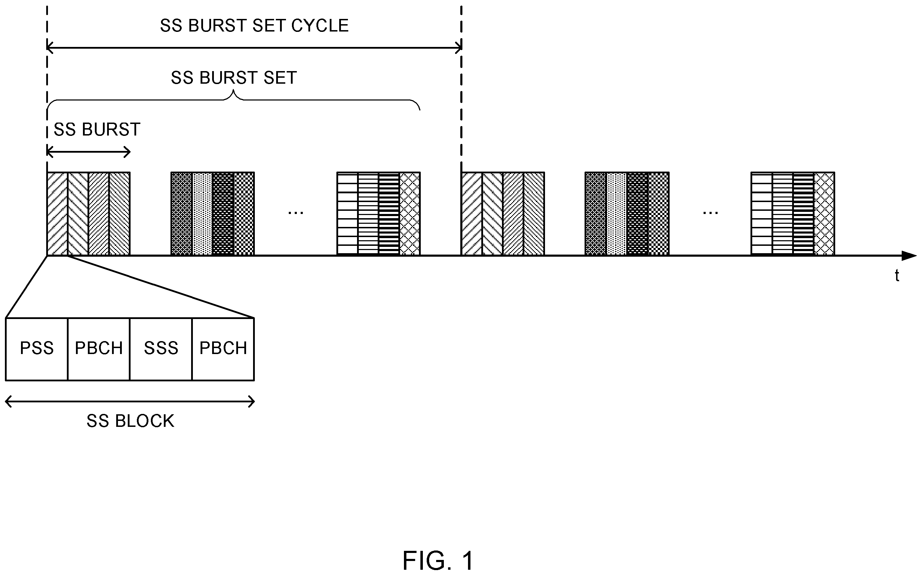

FIG. 1 is a conceptual explanatory diagram of an SS block. The SS block at least includes a PSS (Primary Synchronization Signal) for NR (NR-PSS), an SSS (Secondary Synchronization Signal) for NR (NR-SSS), and a PBCH for NR (NR-PBCH), which can be used for an application similar to a PSS, an SSS, and a PBCH of existing LTE systems. Thus, the SS block may be referred to as an "SS/PBCH block." Note that the SS block may include a synchronization signal (TSS (Tertiary SS)) which is different from the PSS and the SSS.

The NR-PBCH may include broadcast information and the DMRS (Demodulation Reference Signal, the DMRS for the PBCH) for demodulation of the broadcast information.

For example, the length of the SS block is a plurality of OFDM symbols. In this example, one symbol of PSS and one symbol of SSS and two symbols of PBCH are multiplexed in time division multiplexing (TDM). The PSS and the SSS, or the PSS and the PBCH may be multiplexed in multiplexed in time division multiplexing (TDM) or may be multiplexed in frequency division multiplexing (FDM).

A set of one or a plurality of SS blocks may be referred to as an "SS burst." In this example, the SS burst is constituted of a plurality of contiguous SS blocks in terms of time, but the embodiment is not limited to this. For example, the SS burst may be constituted of SS blocks with contiguous frequency and/or time resources, or may be constituted of SS blocks with non-contiguous frequency and/or time resources.

It is preferable for the SS burst to be transmitted every certain periodicity (which may be referred to as an "SS burst periodicity"). Alternatively, the SS burst does not need to be transmitted periodically (may be transmitted in non-periodically). Transmission may be performed in a period of SS burst length (duration) and/or the SS burst periodicity such as one or a plurality of subframes, one or a plurality of slots, and the like.

The SS burst may include a plurality of SS blocks.

One or a plurality of SS bursts may be referred to as an "SS burst set (SS burst series)." For example, the base station (which may be referred to as a "BS (Base Station)," a "transmission/reception point (TRP)," an "eNB (eNodeB)," a "gNB," and the like) and/or the UE may perform beam sweeping on a plurality of SS blocks by using one or more SS bursts included in one SS burst set to transmit.

Note that it is preferable for an SS burst set to be transmitted periodically. The UE may control the receiving process assuming that an SS burst set is transmitted periodically (in an SS burst set periodicity). The SS burst set periodicity may be a default value (for example, 20ms), or may be reported via higher layer signaling from the NW (the network, for example, the base station).

For NR, a scenario (multi-beam scenario) that a cell is configured with a plurality of beams is studied. Note that a "beam" may be interpreted as a "resource," a "space resource," and an "antenna port," and the like. Different SS block or CSI-RS resource configurations may be transmitted by using different base station transmission beams (transmission beams). The different SS blocks may include information indicating different SS block indices or beam indices.

In a multi-beam scenario, it is considered that the UE performs a measurement report of the received quality of the beam level (for each base station transmission beam) for the selection of the appropriate base station transmission beam (or a combination of the base station transmission beam and the UE reception beam). In a multi-beam scenario, it is considered that the UE measures the received quality in a cell level (for each cell) for an appropriate cell selection, and performs a measurement report.

For NR, an RSRP (beam level RSRP, CSI-RS RSRP) for each beam (CSI-RS configuration) and an RSRP (cell level RSRP, cell quality) for each cell are studied as an RSRP based on a CSI-RS. The SS block RSRP is measured from an SSS or a DMRS for an SSS and a PBCH. The CSI-RS RSRP is measured from a CSI-RS in the connected mode.

The cell level RSRP may be derived from high-order N pieces of beams. Here, N may be configured as 1 or greater by the higher layer signaling. In a case that the number of beams is more than 1, averaging may be used to derive the cell level RSRP from a plurality of beams.

The CSI-RS configured for RRM (Radio Resource Management) purpose may be used to derive a cell level quality.

For an RRM measurement, a CSI-RS resource configuration for each transmission beam may be configured for the UE by the CSI-RS configuration information (CSI-RS resource configuration information) from the radio base station. Each CSI-RS resource configuration may indicate time resource and/or frequency resource (CSI-RS RE (Resource Element)) for one or more CSI-RSs. The CSI-RS configuration information may be reported by using higher layer signaling (for example, RRC (Radio Resource Control) signaling), may be reported by using broadcast information (for example, SIB (System Information Block)), or may be reported by using a combination of higher layer signaling and broadcast information.

In a case of measuring a received strength (an RSSI or noise and interference for an SINR) based on an SS block, it is considered that an influence of an actual interference based on data traffic in another cell may not be reflected.

For example, in a synchronized network, SS block transmissions from different cells collide. The beam level RSSI measurement based on symbols of an SS block and a bandwidth of an SS block may not reflect actual interference.

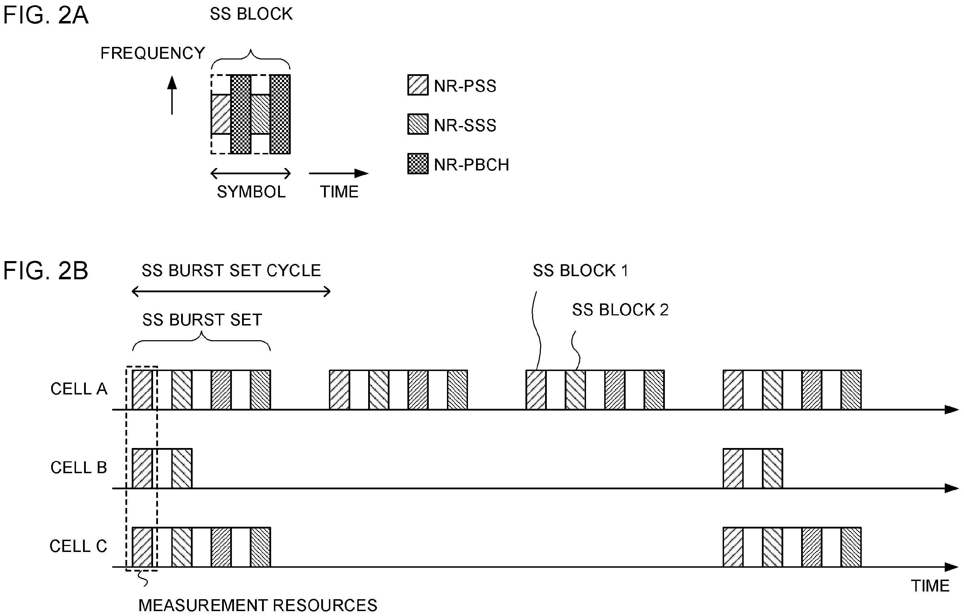

For example, in a case that resources for an RSSI measurement is configured in an SS block as shown in FIG. 2A, and SS block transmission is performed in measurement resources in SS block 1 of the cell A also in the cells B, C as shown in FIG. 2B, measured interference (received strength) does not depend on data traffic in another cell and hardly change.

Then, the inventors of the present invention have studied a method to derive the received quality (for example, the RSRQ or the RS-SINR) based on the CSI-RS, and have resulted in the present invention.

Specifically, received quality based on a CSI-RS to reflect an influence of the actual interference based on the data traffic in another cell is defined. Both beam level received quality and cell level received quality are considered.

How to measure the beam level RSSI (or noise and interference for the SINR) based on the CSI-RS is defined. How to derive beam level RSRQ (or SINR) based on the beam level RSSI (or noise and interference for the SINR) is defined. How to derive cell level RSRQ (or SINR) based on the beam level RSRQ (or SINR) is defined.

How to measure or derive the cell level RSSI (or noise and interference for the SINR) based on the CSI-RS is defined. How to derive the cell level RSRQ (or SINR) based on the cell level RSSI (or noise and interference for the SINR) is defined.

In the following, the received strength may be the RSSI, and the received quality may be the RSRQ. In this case, beam level received strength may be the beam level RSSI, the beam level received quality may be the beam level RSRQ, cell level received strength may be the cell level RSSI, and the cell level received quality may be the cell level RSRQ.

In the following, the received strength may be the noise and interference (noise plus interference) for the SINR, and the received quality may be the SINR. In this case, the beam level received strength may be the noise and interference of the beam level, the beam level received quality may be a beam level SINR, the cell level received strength may be the noise and interference of the cell level, and the cell level received quality may be a cell level SINR.

The RSSI may be interpreted as the noise and interference for the SINR. The RSRQ may be interpreted as the SINR. The results for each base station transmission beam may be interpreted as the results for each CSI-RS resource configuration.

In the following, the measurement of the received strength or the received quality may include the derivation of the received strength or the received quality. In a case that the derivation from another result is not performed to obtain the received strength or the received quality, the expression "the received strength or the received quality can be measured directly" may be used.

### (Radio Communication Method)

### <First Embodiment>

In a first embodiment of the present invention, the UE measures a beam level received strength (a beam level RSSI, or noise and interference of a beam level), based on CSI-RSs.

In the following aspect 1-1 and aspect 1-2, a determination method of resources (measurement resources) for a beam level received strength measurement will be described.

### <<Aspect 1-1>>

The beam level received strength measurement may be performed based on the CSI-RS configuration information.

OFDM symbols (time resources) for the beam level received strength measurement may include corresponding CSI-RS REs (resource elements) or may include a part of corresponding CSI-RS REs.

The measurement bandwidth (frequency resources) of the beam level received strength may be notified for the corresponding CSI-RS resources.

For CSI-RS configuration information for the RRM measurement, information indicating time resources and/or frequency resources for measurement resources may be included in the CSI-RS configuration information, or may be reported by another RRC signaling.

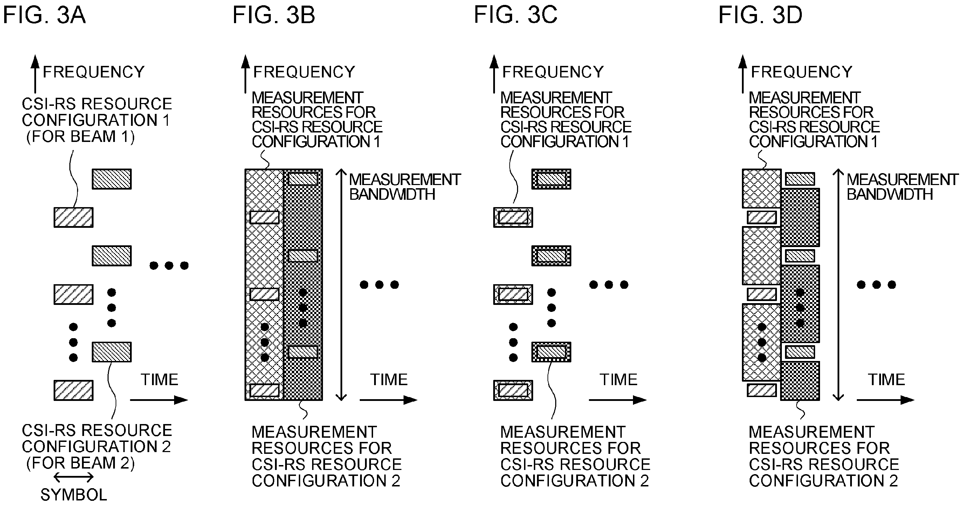

FIGS. 3A to 3D are diagrams to show examples of measurement resources of beam level RSSIs in a case that a plurality of CSI-RS resource configurations corresponding to a plurality of beams are multiplexed in TDM. A plurality of different beams are transmitted in CSI-RSs in different symbols or slots.

In the example shown in FIG. 3A, CSI-RS resource configuration 1 using beam 1 and CSI-RS resource configuration 2 using beam 2 are multiplexed in TDM. The frequency resources of CSI-RSs in each of CSI-RS resource configurations 1 and 2 are dispersed (discrete).

In a case that CSI-RS resource configurations 1 and 2 of FIG. 3A are configured, as shown in FIG. 3B, measurement resources of an RSSI corresponding to each of CSI-RS resource configuration 1 (beam 1) and CSI-RS resource configuration 2 (beam 2) include corresponding CSI-RS REs in corresponding symbols and may be frequency resources of the whole measurement bandwidth.

In a case that CSI-RS resource configurations 1 and 2 of FIG. 3A are configured, as shown in FIG. 3C, as measurement resources of an RSSI corresponding to each of CSI-RS resource configurations 1 and 2, a part of frequency resources (for example, corresponding CSI-RS REs) in the measurement bandwidth may be configured in corresponding symbols.

In a case that CSI-RS resource configurations 1 and 2 of FIG. 3A are configured, as shown in FIG. 3D, measurement resources of an RSSI corresponding to each of CSI-RS resource configurations 1 and 2 may be REs which do not include CSI-RS REs in the whole corresponding symbols and measurement bandwidth.

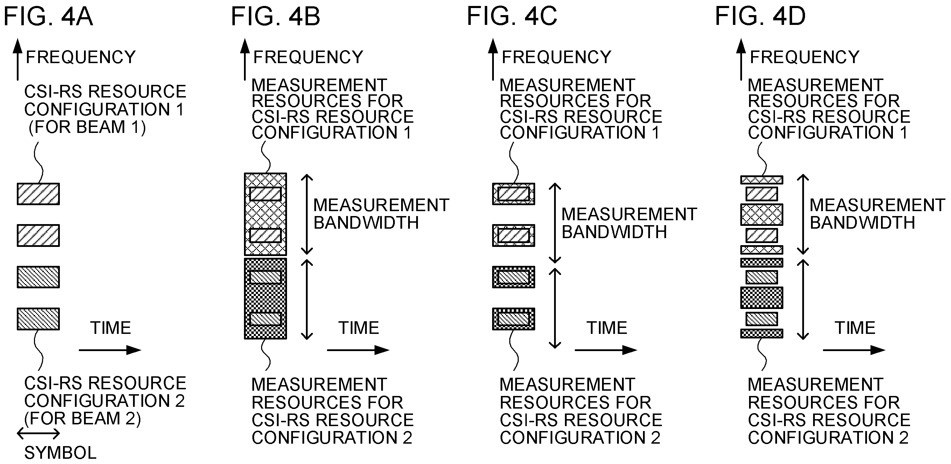

FIG. 4 is a diagram to show examples of measurement resources of beam level RSSIs in a case that a plurality of CSI-RS resource configurations corresponding to a plurality of beams are multiplexed in FDM. A plurality of different transmission beams are transmitted in CSI-RSs in different PRBs.

In the example shown in FIG. 4A, CSI-RS resource configuration 1 using beam 1 and CSI-RS resource configuration 2 using beam 2 are multiplexed in FDM. The frequency resources of CSI-RSs in each of CSI-RS resource configurations 1 and 2 are dispersed (discrete).

In a case that CSI-RS resource configurations 1 and 2 of FIG. 4A are configured, as shown in FIG. 4B, measurement resources of an RSSI corresponding to each of CSI-RS resource configurations 1 and 2 include corresponding CSI-RS REs and may be contiguous frequency resources in the corresponding measurement bandwidth.

In a case that CSI-RS resource configurations 1 and 2 of FIG. 4A are configured, as shown in FIG. 4C, as measurement resources of an RSSI corresponding to each of CSI-RS resource configurations 1 and 2, a part of frequency resources (for example, CSI-RS REs) in the measurement bandwidth may be configured.

In a case that CSI-RS resource configurations 1 and 2 of FIG. 4A are configured, as shown in FIG. 4D, measurement resources of an RSSI corresponding to each of CSI-RS resource configurations 1 and 2 may be REs which do not include CSI-RS REs in the corresponding symbols and the corresponding measurement bandwidth.

According to above-mentioned aspect 1-1, the UE can measure the beam level RSSI or the noise and interference of the beam level based on the CSI-RS. The beam level received strength reflecting an influence of the actual interference based on the data traffic in another cell can be measured by using the CSI-RS.

### <<Aspect 1-2>>

The UE may derive the beam level received quality, based on the beam level RSRQ and the beam level received strength.

The RSRQ may be determined from the RSRP and the RSSI for each CSI-RS by a formula similar to LTE (for example, RSRQ = N x RSRP/RSSI).

The beam level RSRQ may be derived by using this formula from the measured beam level RSRP and the measured beam level RSSI.

The SINR may be determined from the RSRP and noise and interference for each CSI-RS by a formula similar to LTE (for example, SINR = RSRP/(noise plus interference)).

The beam level SINR may be derived by using this formula from the measured beam level RSRP and the noise and interference of the measured beam level.

According to above-mentioned aspect 1-2, the UE can derive the accurate beam level RSRQ or beam level SINR, based on the CSI-RS.

### <<Aspect 1-3>>

The UE may derive the cell level received quality, based on the beam level received quality.

The cell level received quality is derived as combination of at least one beam level received quality. Herein, the beam level received quality is referred to as "beam level results," and the cell level received quality is referred to as "cell level results."

For example, the beam level results selected for the combination may be all the beam level results, may be up to N pieces of the beam level result in higher order, may be the beam level result that is the highest among the beam level results greater than the threshold value of absolute values, may be the beam level result that is the highest among the beam level results within the relative threshold value to the highest beam level result, may be up to N pieces of the beam level results in higher order among the beam level results greater than the threshold value of absolute values, and may be up to N pieces of the beam level result in higher order among the beam level results within the relative threshold value to the highest beam level result.

A combination method of selected beam level results may be an average of the selected beam level results or may be a weighted average of the selected beam level results.

According to above-mentioned aspect 1-3, the UE can derive the cell level RSRQ from the beam level RSRQ. The UE can derive the cell level SINR from the beam level SINR.

### <<Aspect 1-4>>

The UE may measure the beam level received strength by using the UE reception beam (reception beam).

With regard to the UE reception beam for the RSRP measurement, following assumption a or assumption b can be used.

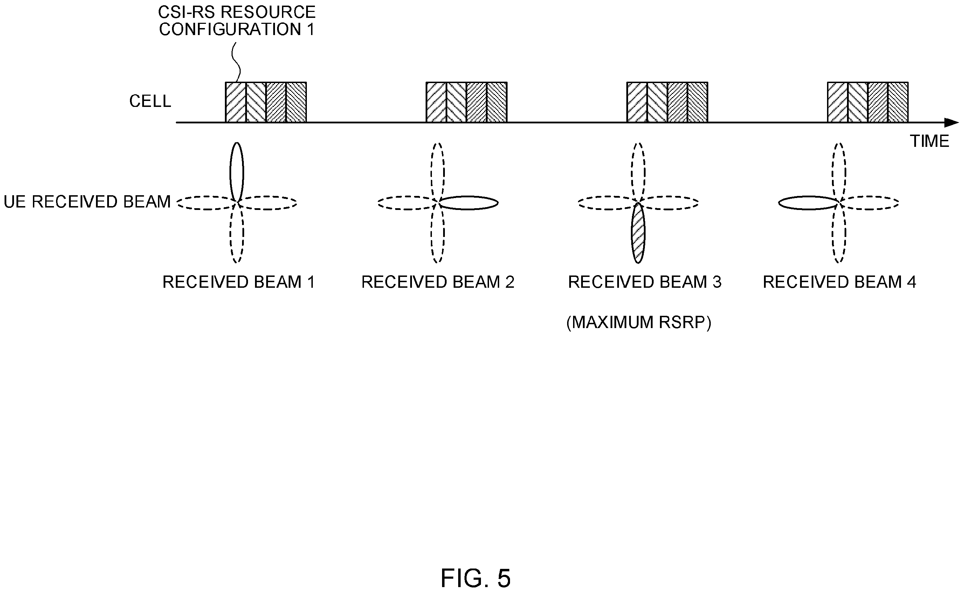

In assumption a, the beam level RSRP may be the highest RSRP obtained from a beam pair link. For example, the beam pair link is a combination of a base station transmission beam and a UE reception beam. As shown in FIG. 5, the UE performs the RSRP measurement by using a plurality of UE reception beams in the same CSI-RS resource configuration (the same transmission beam) and determines the highest RSRP for the CSI-RS resource configuration. In the example of this diagram, the UE measures the RSRP by using reception beams 1 to 4 in CSI-RS resource configuration 1 among CSI-RS resource configurations 1 to 4, and the RSRP corresponding to reception beam 3 is the highest, and hence this RSRP is considered to be the beam level RSRP for CSI-RS resource configuration 1.

In assumption b, the UE determines the UE reception beam for the RSRP measurement, based on the implementation of the UE. For example, the UE may determine the reception beam at random, or may consider an average of the RSRPs measured by using some reception beams to be the beam level RSRP. The UE reception beam for the RSRP measurement may not be the UE reception beam corresponding to the highest RSRP.

The UE may determine the UE reception beam for the beam level received strength measurement by using following options a or b.

Option a is the beam level received strength measurement in a case of performing the beam level RSRP measurement of assumption a. The UE measures the beam level received strength for the CSI-RS resource configuration by using the reception beam used in the measurement of the highest RSRP for a certain CSI-RS resource configuration.

Option b is the beam level received strength measurement in a case of performing the beam level RSRP measurement of assumption b. The UE determines the reception beam to use for the beam level received strength measurement similar to assumption b. For example, the UE may determine the reception beam at random, or may consider an average of the received strengths measured by using some reception beams to be the beam level received strength. The reception beam used for the beam level received strength may be the same as the reception beam used for the beam level RSRP.

According to above-mentioned aspect 1-4, even if the UE uses a plurality of reception beams, the reception beam to use for the beam level received strength measurement can be matched with the reception beam to use for the beam level RSRP measurement, and measuring accuracy can be increased. In a case that an RSRP of a certain reception beam is the highest for a certain CSI-RS resource configuration, and an RSRP of another reception beam is the highest for another CSI-RS resource configuration, interference is also different by being different in the reception beams. The interference measured in resources corresponding to a certain transmission beam is different from the interference measured in resources corresponding to another transmission beam.

### <<Relationship between Aspect 1-1 to Aspect 1-3>>

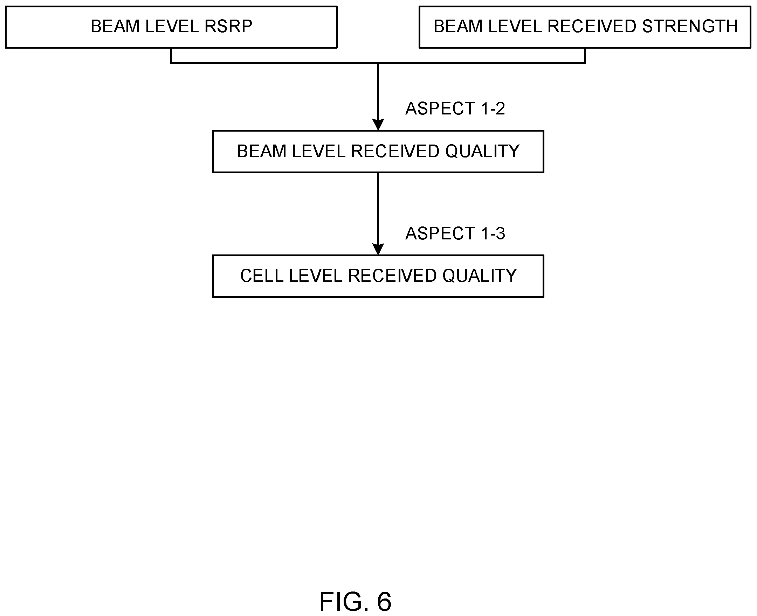

FIG. 6 is a diagram to show an example of a relationship between aspect 1-1 to aspect 1-3.

According to aspect 1-1, the UE measures the beam level received strength, based on each CSI-RS resource configuration.

According to aspect 1-2, the UE derives the beam level received quality, based on the beam level RSRP and the beam level received strength.

According to aspect 1-3, the UE derives the cell level received quality, based on one or more beam level received qualities.

### <Second Embodiment>

In a second embodiment of the present invention, the UE derives or measures the cell level RSRP or the cell level received strength (the cell level RSSI or the noise and interference of the cell level).

### <<Aspect 2-1>>

The UE may derive the cell level received strength, based on the beam level received strength.

The UE may derive a combination of some beam level received strengths obtained from aspect 1-1 or aspect 1-2 as the cell level received strength. Herein, the beam level received strength is referred to as "beam level results," and the cell level received strength is referred to as "cell level results."

For example, the beam level results selected for the combination may be all the beam level results, may be up to N pieces of the beam level result in higher order, may be the beam level result that is the highest among the beam level results greater than the threshold value of absolute values, may be the beam level result that is the highest among the beam level results within the relative threshold value to the highest beam level result, may be up to N pieces of the beam level results in higher order among the beam level results greater than the threshold value of absolute values, and may be up to N pieces of the beam level result in higher order among the beam level results within the relative threshold value to the highest beam level result.

A combination method of selected beam level results may be an average of the selected beam level results or may be a weighted average of the selected beam level results.

According to above-mentioned aspect 2-1, the UE can derive the cell level RSSI from the beam level RSSI. The UE can derive the noise and interference of the cell level from the noise and interference of the beam level.

### <<Aspect 2-2>>

The UE may measure the cell level received strength.

The UE may perform the cell level received strength measurement based on the CSI-RS, based on the CSI-RS configuration information for the RRM measurement. The UE may further perform the cell level received strength measurement based on the CSI-RS, based on additional information. The additional information may be reported by RRC signaling.

The UE may perform the cell level received strength measurement based on the CSI-RS by using following option a or option b.

In option a, the UE may perform measurement in the indicated measurement bandwidth of OFDM symbols including all indicated CSI-RS resources, or may perform measurement in a part of the measurement bandwidth of the OFDM symbols (for example, only in CSI-RS REs).

In option b, the UE may perform measurement in OFDM symbols including CSI-RS resources indicated by additional information, or may perform measurement in a part of the measurement bandwidth of the OFDM symbols (for example, only in CSI-RS REs). The additional information may indicate default CSI-RS resources or may indicate grouping of CSI-RS resources.

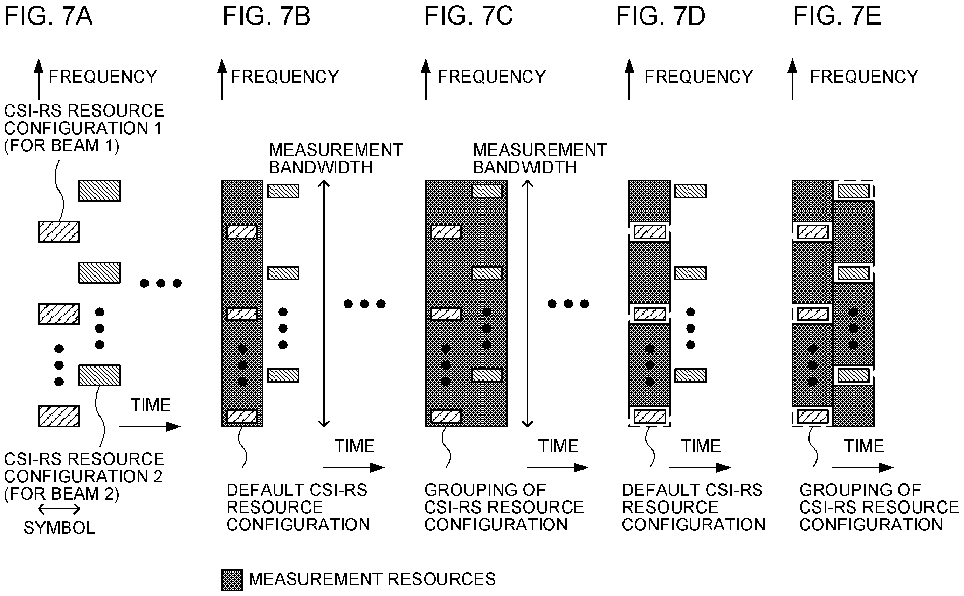

FIGS. 7A to 7E are diagrams to show examples of measurement resources of cell level RSSIs in a case that a plurality of CSI-RS resource configurations corresponding to a plurality of beams are multiplexed in TDM. A plurality of different beams are transmitted in CSI-RSs in different symbols or slots.

In the example shown in FIG. 7A, CSI-RS resource configuration 1 using beam 1 and CSI-RS resource configuration 2 using beam 2 are multiplexed in TDM. The frequency resources of CSI-RSs in each of CSI-RS resource configurations 1 and 2 are dispersed (discrete).

As shown in FIG. 7B, in a case that CSI-RS resource configuration 1 (beam 1) is indicated as the default CSI-RS resource configuration for the cell level RSSI, the measurement resources of the cell level RSSI may be frequency resources of the whole measurement bandwidth in symbols of CSI-RS resource configuration 1. The measurement resources of the cell level RSSI may be all CSI-RS REs in the default CSI-RS resource configuration. In a case that a default CSI-RS resource configuration is not indicated, the measurement resources of the cell level RSSI may be frequency resources of the whole measurement bandwidth in symbols of all CSI-RS resource configurations, or may be all CSI-RS REs.

As shown in FIG. 7C, in a case that CSI-RS resource configuration 1 (beam 1) and CSI-RS resource configuration 2 (beam 2) are indicated as grouping of CSI-RS resources for the cell level RSSI, the measurement resources of the cell level RSSI may be frequency resources of the whole measurement bandwidth in symbols of CSI-RS resource configurations 1 and 2. The measurement resources of the cell level RSSI may be all CSI-RS REs.

As shown in FIG. 7D, in a case that CSI-RS resource configuration 1 (beam 1) is indicated as the default CSI-RS resource configuration for the cell level RSSI, the measurement resources of the cell level RSSI may be REs which do not include CSI-RS REs of the whole measurement bandwidth in symbols of CSI-RS resource configuration 1. In a case that a default CSI-RS resource configuration is not indicated, the measurement resources of the cell level RSSI may be REs which do not include CSI-RS REs of the whole measurement bandwidth in symbols of all CSI-RS resource configurations.

As shown in FIG. 7E, in a case that CSI-RS resource configuration 1 (beam 1) and CSI-RS resource configuration 2 (beam 2) are indicated as grouping of CSI-RS resources for the cell level RSSI, the measurement resources of the cell level RSSI may be REs which do not include CSI-RS REs of the whole measurement bandwidth in symbols of CSI-RS resource configurations 1 and 2.

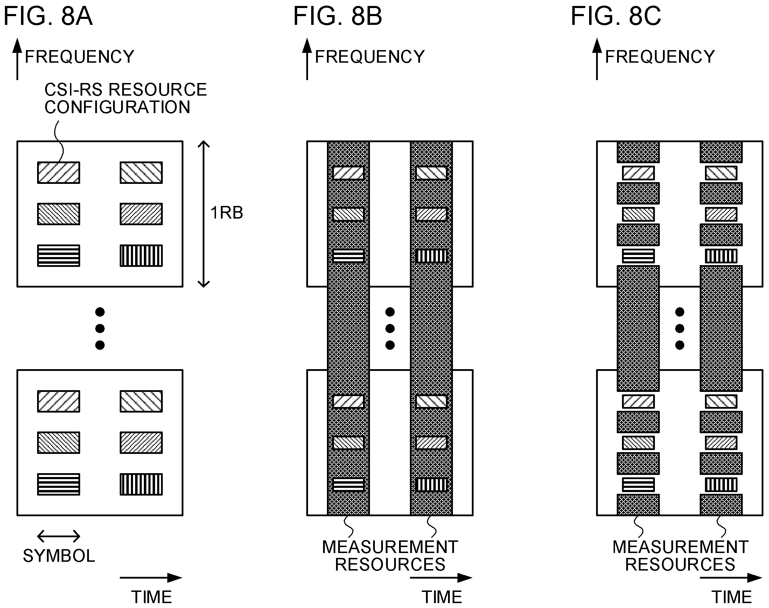

FIGS. 8A to 8C are diagrams to show examples of measurement resources of cell level RSSIs in a case that a plurality of CSI-RS resource configurations corresponding to a plurality of beams are multiplexed in TDM and FDM.

As shown in FIG. 8A, a plurality of different beams are transmitted in CSI-RSs in different time/frequency resources in one RB.

In a case that a plurality of CSI-RS resource configurations of FIG. 8A are configured, as shown in FIG. 8B, the measurement resources of the cell level RSSI may be the whole measurement bandwidth including all CSI-RS resources. The measurement resources of the cell level RSSI may be all CSI-RS REs.

In a case that a plurality of CSI-RS resource configurations of FIG. 8A are configured, as shown in FIG. 8C, the measurement resources of the cell level RSSI may be REs which do not include CSI-RS REs in the whole measurement bandwidth including all CSI-RS resources.

Different configuration methods of measurement resources are suitable for different purposes, and different beam foaming schemes.

According to above-mentioned aspect 2-2, the UE can measure the cell level RSSI or the noise and interference of the cell level.

### <<Aspect 2-3>>

The UE may derive the beam level received quality without the use of the beam level RSRP or without the use of the beam level received strength.

The UE may derive the beam level received quality by using following aspect 2-3-a or aspect 2-3-b.

In aspect 2-3-a, the UE derives the beam level received quality, based on the measured beam level RSRP and the measured or derived cell level received strength. In other words, the UE uses the results of the cell level only for the received strength.

In this case, by using the cell level received strength common to all the CSI-RS resource configurations (beams) of the serving cell, the relationship between the beam level RSRP and the beam level received quality in all the CSI-RS resource configurations is the same, and thus the signification of the aspect 2-3-a is small. On the other hand, since the inter-frequency measurement in another carrier or the measurement of neighboring cells is simple, aspect 2-3-a can be used.

In aspect 2-3-b, the UE derives the beam level received quality, based on the derived cell level RSRP and the measured beam level received strength. In other words, the UE uses the results of the cell level only for the RSRP.

Since the RSRP is not for each beam, the signification of option b is small.

According to above-mentioned aspect 2-3, even if one of the RSRP and the received strength is a result of the cell level, the UE can derive the beam level RSRQ or the beam level SINR.

### <<Aspect 2-4>>

The UE may derive the cell level received quality, based on at least any one of the results of aspect 2-1 to aspect 2-3.

The UE may derive the cell level received quality by using following aspect 2-4-a or aspect 2-4-b.

In aspect 2-4-a, the UE derives the cell level received quality, based on the derived cell level RSRP and the measured or derived cell level received strength.

By being based on two derived values, an incorrect cell level received quality may be derived in some cases.

In aspect 2-4-b, the UE derives the cell level received quality, based on a combination of the beam level received quality derived by aspect 2-3. Herein, the beam level received quality is referred to as "beam level results," and the cell level received quality is referred to as "cell level results."

For example, the beam level results selected for the combination may be all the beam level results, may be up to N pieces of the beam level result in higher order, may be the beam level result that is the highest among the beam level results greater than the threshold value of absolute values, may be the beam level result that is the highest among the beam level results within the relative threshold value to the highest beam level result, may be up to N pieces of the beam level results in higher order among the beam level results greater than the threshold value of absolute values, and may be up to N pieces of the beam level result in higher order among the beam level results within the relative threshold value to the highest beam level result.

A combination method of selected beam level results may be an average of the selected beam level results or may be a weighted average of the selected beam level results.

According to above-mentioned aspect 2-4, the UE can derive the cell level RSRQ or the cell level SINR, based on at least any one of the results of aspect 2-1 to aspect 2-3.

### <<Relationship between Aspect 2-1 to Aspect 2-4>>

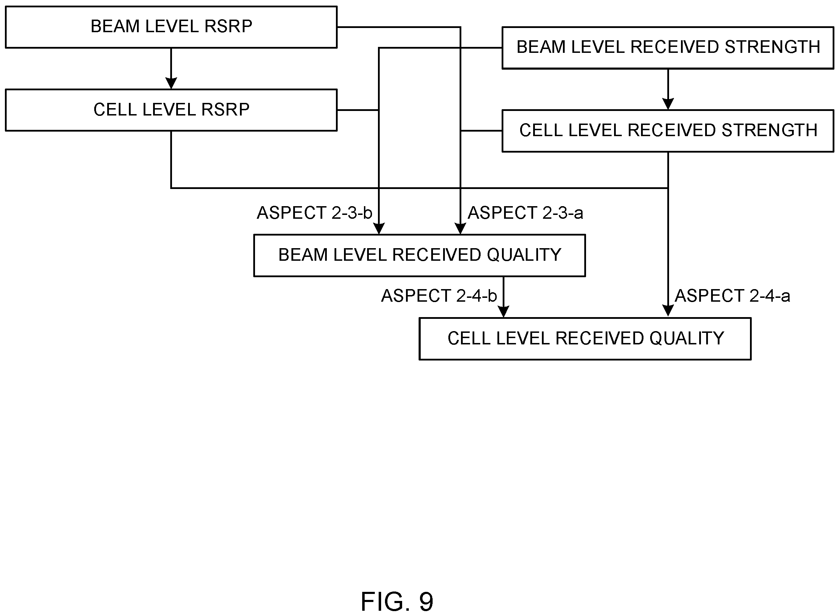

FIG. 9 is a diagram to show an example of a relationship between aspect 2-1 to aspect 2-4.

According to aspect 2-1 and aspect 2-2, the UE can measure or derive the cell level received strength. According to aspect 2-1, the UE can derive the cell level received strength from the beam level received strength. According to aspect 2-2, the UE can measure the cell level received strength.

According to aspect 2-3-a, the UE can derive the beam level received quality, based on the beam level RSRP and the cell level received strength. According to aspect 2-3-b, the UE can derive the beam level received quality, based on the cell level RSRP and the beam level received strength.

According to aspect 2-4-a, the UE can derive the cell level received quality, based on the cell level RSRP and the cell level received strength. According to aspect 2-4-b, the UE derives the cell level received quality, based on a combination of the beam level received quality derived by aspect 2-3.

### <<Relationship between First Embodiment and Second Embodiment>>

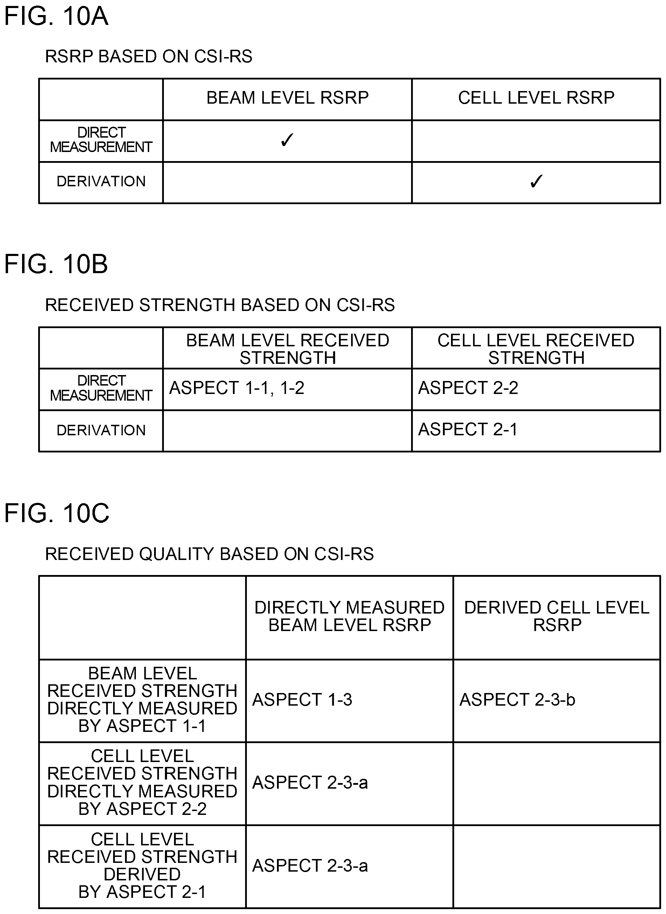

As shown in FIG. 10A, the UE may measure the beam level RSRP directly, based on each CSI-RS resource configuration. The UE may derive the cell level RSRP, based on one or more beam level RSRPs.

As shown in FIG. 10B in aspect 1-1, the UE may measure the beam level received strength directly, based on each CSI-RS resource configuration. Similar to aspect 2-2, the UE may measure the cell level received strength directly. As aspect 2-1, the UE may derive the cell level received strength, based on one or more beam level received qualities.

As shown in FIG. 10C, in aspect 1-3, the UE may derive the beam level received quality, based on the measured beam level RSRP and the beam level received strength measured by aspect 1-1. In this case, the beam level received quality in the highest precision can be obtained.

In aspect 2-3-a, the UE may derive the beam level received quality, based on the measured beam level RSRP and the cell level received strength measured by aspect 2-2. This case is used in the inter-frequency measurement on another carrier or the measurement of neighboring cells.

In aspect 2-3-a, the UE may derive the beam level received quality, based on the measured beam level RSRP and the cell level received strength measured by aspect 2-1. This case has a small signification.

In aspect 2-3-b, the UE may derive the beam level received quality, based on the derived cell level RSRP and the beam level received strength measured by aspect 1-1. This case has a small signification.

The UE may derive the cell level received quality, based on the derived cell level RSRP and the measured or derived cell level received strength. The UE may derive the cell level received quality, based on the derived beam level received quality.

### <Other Embodiments>

NR may support different types of measurement (or derivation) methods of the above-mentioned received strength and/or received quality. The measurement method may be configurable or may be applied to the UE according to at least any one of the UE RRC state (the idle mode and the connected mode), different purposes (for example, intra-frequency measurement and inter-frequency measurement), and the UE capability.

For example, NR may configure aspect 1-1 for the beam level received strength measurement in the serving cell measurement, and may configure aspect 2-2 for the cell level received strength measurement in the neighboring cell measurement and/or the inter-frequency measurement.

For example, NR may configure aspect 1-1 for the beam level received strength measurement for the intra-frequency measurement of the serving cell and the neighboring cells on the serving carrier, and may configure aspect 2-2 for the cell level received strength measurement for the inter-frequency measurement on another carrier.

For example, in a case that the radio base station transmits a plurality of CSI-RS resources in one RB by using a digital or hybrid beam foaming scheme, the radio base station may use option a of aspect 2-2 for the cell level received strength measurement.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

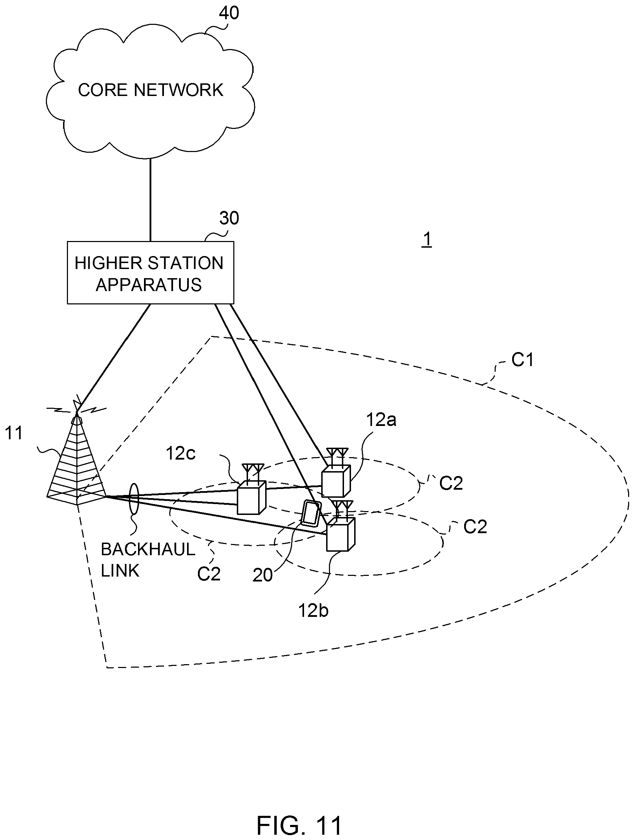

FIG. 11 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to those shown in the diagram.

The user terminals 20 can connect with both the radio base station 11 and the radio base stations 12. It is assumed that the user terminals 20 use the macro cell C1 and the small cells C2 at the same time by CA or DC. The user terminals 20 may adopt CA or DC by using a plurality of cells (CCs) (for example, five or less CCs, or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmission/reception point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmission/reception points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands of one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the

### PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Delivery confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel

(PRACH (Physical Random Access Channel)) and so on are used as uplink channels. User data, higher layer control information and so on are communicated on the PUSCH. In addition, radio quality information (CQI (Channel Quality Indicator)) of the downlink, delivery confirmation information, a scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

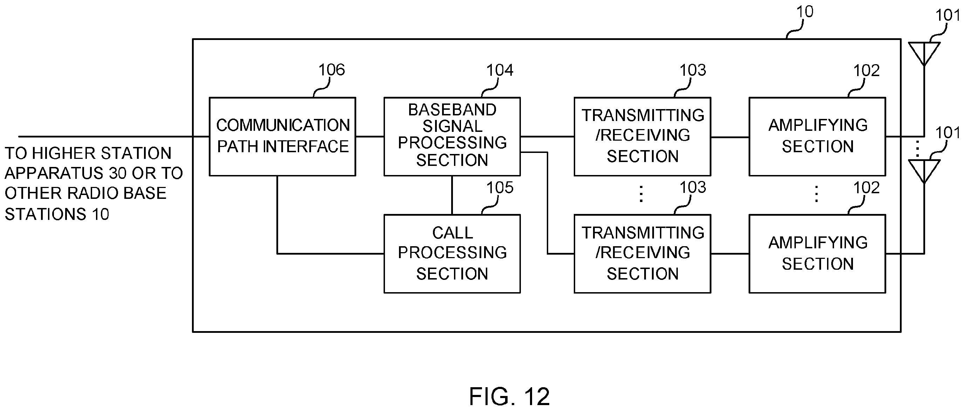

FIG. 12 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 may transmit a reference signal (for example, CSI-RS) in one or more reference signal resources (for example, CSI-RS resource configuration) for a measurement of a channel state.

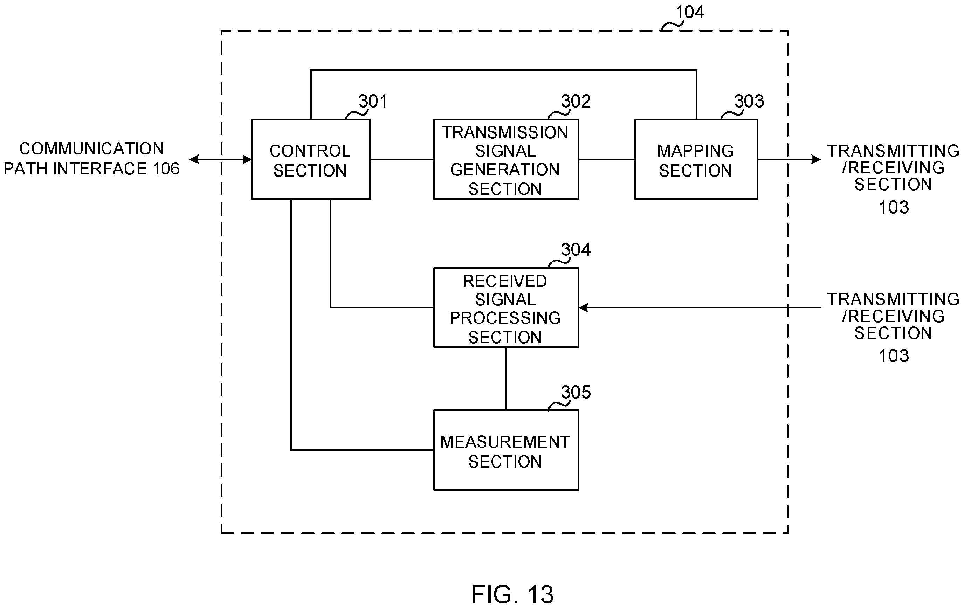

FIG. 13 is a diagram to show an example of a functional structure of the radio base station according to one embodiment of the present invention. Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present invention pertains.

The control section 301, for example, controls the generation of signals by the transmission signal generation section 302, the mapping of signals by the mapping section 303, and so on. The control section 301 controls the signal receiving processes by the received signal processing section 304, the measurements of signals by the measurement section 305, and so on.

The control section 301 controls scheduling (for example, resource allocation) of system information, a downlink data signal (for example, a signal transmitted on a PDSCH), and a downlink control signal (for example, a signal transmitted on a PDCCH and/or an EPDCCH, transmission confirmation information, and so on). Based on the results of determining necessity or not of retransmission control to the uplink data signal, or the like, the control section 301 controls generation of a downlink control signal, a downlink data signal, and so on. The control section 301 controls the scheduling of a synchronization signal (for example, a PSS (Primary Synchronization Signal)/an SSS (Secondary Synchronization Signal)), a downlink reference signal (for example, a CRS, a CSI-RS, a DMRS), and so on.

The control section 301 controls scheduling of an uplink data signal (for example, a signal transmitted on a PUSCH), an uplink control signal (for example, a signal transmitted on a PUCCH and/or a PUSCH, transmission confirmation information, and so on), a random access preamble (for example, a signal transmitted on a PRACH), an uplink reference signal, and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present invention pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present invention pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), received quality

(for example, RSRQ (Reference Signal Received Quality), an SINR (Signal to Interference plus Noise Ratio)), a signal strength (for example, RSSI (Received Signal Strength Indicator)), channel information (for example, CSI), and so on. The measurement results may be output to the control section 301.

### (User Terminal)

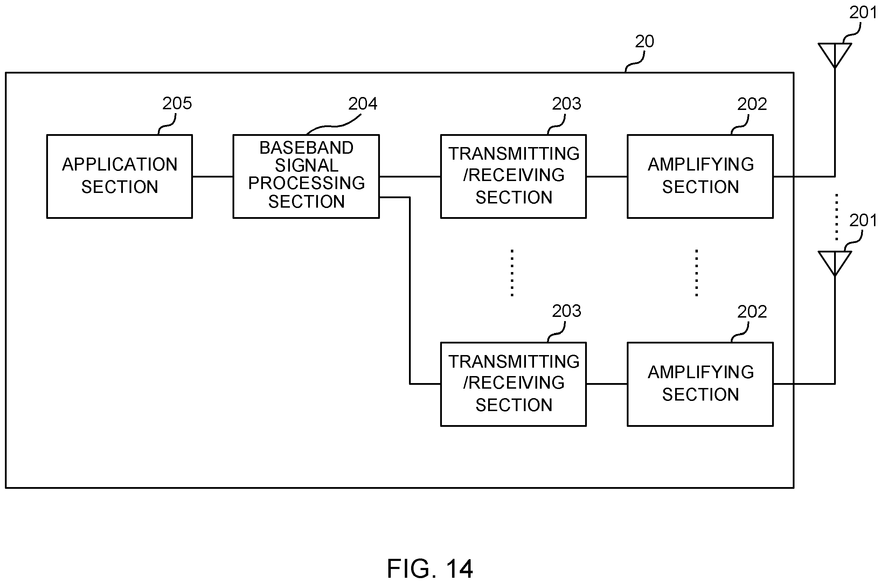

FIG. 14 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may receive a reference signal (for example, CSI-RS) in one or more reference signal resources (for example, CSI-RS resource configuration) for a measurement of a channel state.

The transmitting/receiving sections 203 may transmit a report including at least one of the first received power (for example, beam level RSRP and/or cell level RSRP), the second received power (for example, beam level received strength and/or cell level received strength), and the received quality (for example, beam level received quality and/or cell level received quality) to the radio base station.

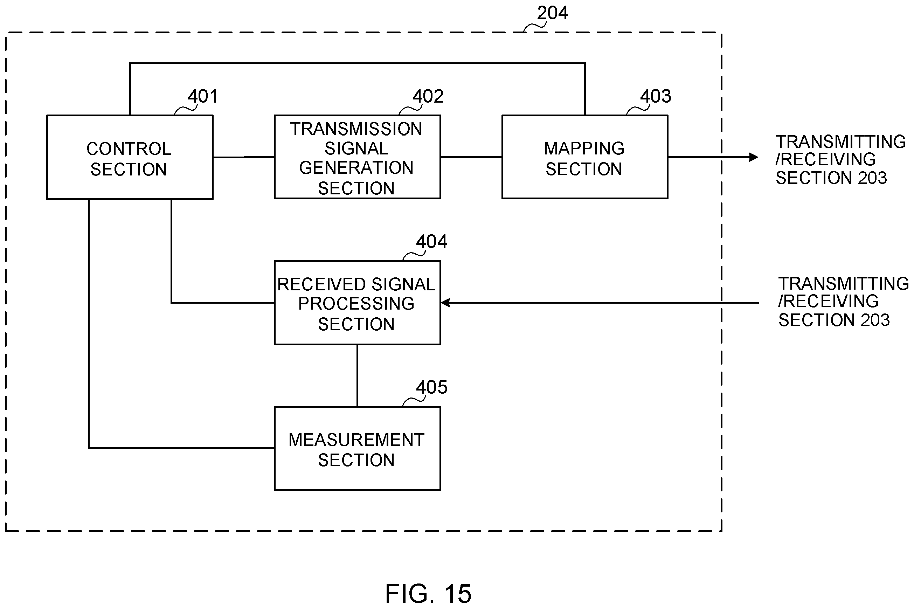

FIG. 15 is a diagram to show an example of a functional structure of a user terminal according to one embodiment of the present invention. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present invention pertains.

The control section 401, for example, controls the generation of signals by the transmission signal generation section 402, the mapping of signals by the mapping section 403, and so on. The control section 401 controls the signal receiving processes by the received signal processing section 404, the measurements of signals by the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

When the control section 401 acquires various kinds of information reported by the radio base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present invention pertains.

For example, the transmission signal generation section 402 generates an uplink control signal about delivery confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present invention pertains.

For example, the measurement section 405 may perform RRM measurement, CSI measurement, and so on, based on the received signal. The measurement section 405 may measure a received power (for example, RSRP), received quality (for example, RSRQ, SINR), a signal strength (for example, RSSI), channel information (for example, CSI), and so on. The measurement results may be output to the control section 401.

The measurement section 405 may measure the first received power (for example, the beam level RSRP or the cell level RSRP) of a reference signal, and the second received power (for example, the beam level received strength or the cell level received strength) in the radio resources associated with one or more reference signal resources. The measurement section 405 may derive the received quality (for example, the beam level received quality or the cell level received quality) of the cell, based on the first received power and the second received power.

The measurement section 405 may measure the first received power in each reference signal resource, measures the second received power in radio resources associated with each reference signal resource, and derive received quality corresponding to each reference signal resource, based on the first received power corresponding to each reference signal resource and the second received power corresponding to each reference signal resource.

The measurement section 405 may derive the received quality of the cell, based on received quality of each reference signal resource.

In the measurement section 405, the radio resources may be corresponding reference signal resources or resources that include a bandwidth including corresponding reference signal resources and reported by a radio base station.

The radio resources may be reference signal resources reported by a radio base station or resources that includes a bandwidth including reference signal resources reported by the radio base station and reported by the radio base station, and the measurement section 405 may measure the second received power of the cell in the radio resources.

The measurement section 405 may derive the second received power (for example, the cell level received strength) of the cell, based on the second received power (for example, the beam level received strength) corresponding to each reference signal resource.

The measurement section 405 may derive the received quality (for example, the cell level received quality) of the cell, based on the first received power (for example, the beam level RSRP) corresponding to each reference signal resource and the second received power (for example, the cell level received strength) of the cell. The measurement section 405 may derive the received quality (for example, the cell level received quality) of the cell, based on the first received power (for example, the cell level RSRP) of the cell and the second received power (for example, the beam level received strength) corresponding to each reference signal resource.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

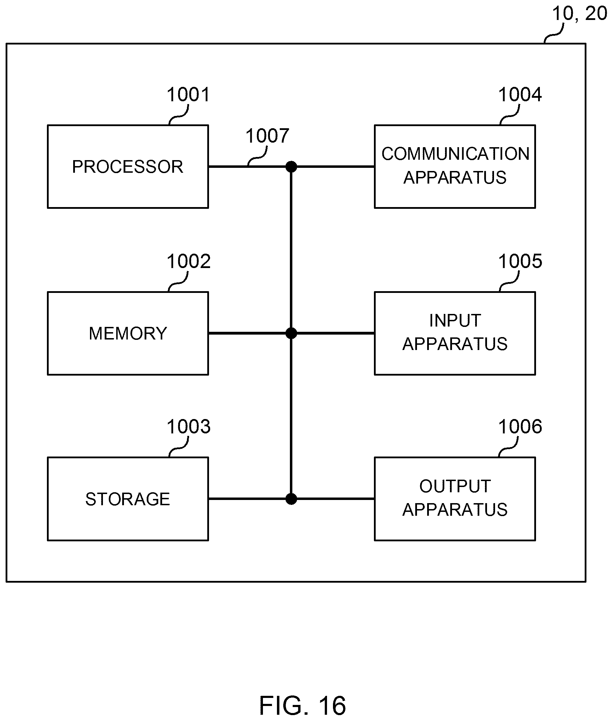

For example, a radio base station, a user terminal, and so on according to one embodiment of the present invention may function as a computer that executes the processes of the radio communication method of the present invention. FIG. 16 is a diagram to show an example of a hardware structure of the radio base station and the user terminal according to one embodiment of the present invention. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control reading and/or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in this specification and/or the terminology that is needed to understand this specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks, and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in this specification can be used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," a "NodeB," an "eNodeB (eNB)," an "access point," a "transmission point," a "reception point," a "transmission/reception point," a "femto cell," a "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

A base station and/or a mobile station may be referred to as a "transmitting apparatus," a "receiving apparatus," and so on.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions and/or (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the spirit and scope of the present invention defined by the recitations of claims. Consequently, the description in this specification is provided only for the purpose of explaining examples, and should by no means be construed to limit the present invention in any way.

## Claims

1. A user terminal comprising:
a receiving section that receives a reference signal in one or more reference signal resources for a measurement of a channel state; and
a measurement section that measures a first received power of the reference signal and a second received power in radio resources associated with the one or more reference signal resources, wherein
the measurement section derives a received quality of a cell, based on the first received power and the second received power.

2. The user terminal according to claim 1, wherein
the measurement section measures the first received power in each reference signal resource, measures the second received power in radio resources associated with each reference signal resource, and derives received quality corresponding to each reference signal resource, based on the first received power corresponding to each reference signal resource and the second received power corresponding to each reference signal resource.

3. The user terminal according to claim 2, wherein
the measurement section derives the received quality of the cell, based on received quality of each reference signal resource.

4. The user terminal according to claim 2 or 3, wherein
the radio resources are corresponding reference signal resources or resources that include a bandwidth including corresponding reference signal resources and reported by a radio base station.

5. The user terminal according to claim 1, wherein
the radio resources are reference signal resources reported by a radio base station or resources that includes a bandwidth including reference signal resources reported by the radio base station and reported by the radio base station, and
the measurement section measures the second received power of the cell in the radio resources.

6. A radio communication method of a user terminal, the radio communication method comprising:
receiving a reference signal in one or more reference signal resources for a measurement of a channel state; and
measuring a first received power of the reference signal and a second received power in radio resources associated with the one or more reference signal resources, wherein
the user terminal derives received quality of a cell, based on the first received power and the second received power.
